# EUROPEAN PATENT APPLICATION

(11) **EP 1 517 526 A2**
(43) Date of publication of application: **23.03.2005**
(21) Application number: 04021105.4
(22) Date of filing: 22.03.2002
(51) Int. Cl.: H04M 3/46, H04M 7/00

(54) **Call appearance shared by PSTN phone and Voice over IP phone**

(30) Priority: 04.04.2001 US 825645
(62) Divisional of application: 02252098.5
(71) Applicant: LUCENT TECHNOLOGIES INC., Murray Hill, New Jersey 07974-0636 (US)
(72) Inventor: Bushnell, William Jackson, St Charles Illinois 60174 (US); Heeren, David Edward, San Antonio Texas 78258 (US)
(74) Representative: Watts, Christopher Malcolm Kelway, Dr.

(57) **Abstract**

A phone (204) of a system has a connector component (204) that is operationally connectable through a packet network (119) to any selected one or more of a plurality of switch components (166). The system includes a registration server (920) that is coupled with the packet network. The selected switch components serve to provide originating and/or terminating telecommunication service to the phone. Also, the selected switch components serve to support one or more call appearances (182) associated with the phone. The connector component allows a user (137) to provide for a selection of the call appearances. The registration server determines an Internet protocol address for a voice over Internet protocol gateway (164) that serves a phone number (192) associated with the phone, the phone number serving to select the switch components.

## Description

### TECHNICAL FIELD

The invention in one embodiment relates generally to telecommunications and more particularly to operational connection of phones to switches.

### BACKGROUND

One or more work at home users in one example install a second phone line for business calls, in addition to a first phone line for personal calls. The second phone line for business calls in one example is connected to a local switch that is different from the switch that serves the business lines of the company with which the user is associated. For users that work part time at home and part time at the office, such an arrangement in one example has a number of shortcomings.

One exemplary shortcoming relates to billing. In one example, if a user pays for the work at home line, then the user charges toll calls for business to a company credit card. In another example, if the company pays for the work at home line, then the user charges personal calls to a personal credit card. As exemplary disadvantages of such arrangements, credit card calls in one example are more time consuming to originate and expensive than direct dial calls.

A further exemplary shortcoming concerns an exemplary need for a user to run to answer a call. The user in one example has two lines at home, one line for personal use and one line for business use. The two lines in one example are connected to different phones that are located in different rooms of the user's home. If the user is in the user's home office and the personal line rings, then the user in one example undesirably needs to run to another room to answer the call.

In another example, a user connects a two line phone set to both the personal and business lines. As exemplary disadvantages, such two line phone sets are expensive, and undesirably require both the personal and business lines to be run through the house to the home office.

Thus, a need exists for enhanced operational connectability of a phone to one or more switches.

"Internet Telephony Gateway Location" by Rosenberg and Schulzrinne (1998 IEEE) discusses several methods and architectures for locating requested resources on the Internet. More specifically, they disclose a method for an IP host to find the IP address of a gateway, (e.g., an Internet Telephony Gateway ("ITG")) in order for the IP host to place a call to a user on a Public Switched Telephone Network ("PSTN"). They discusse employment of such solutions as Service Location Protocol ("SLP"), Web Indexing, Domain Name system ("DNS"), Lightweight Directory Access Protocol ("LDAP"), Session Announcement Protocol ("SAP"), Routing, and Brokered Multicast Advertisements ("BMA").

EP-A-0 602 856 discloses the concept of a shared line appearance. A software application program provides a termination point for a directory number that is associated with a shared line appearance. An outgoing call from one of the telephone station sets is switched by a switching node to the software application program, or Directory Number Management ("DNM"). The DNM then switches the outgoing call to one or more destination telephone terminals as if the call had originated from the location of the DNM. The DNM receives an incoming call directed to the directory number and routes the call to one or more destination telephone terminals via employment of a secondary dialing plan. The DNM sends a set-up message to station sets with the shared line appearance utilizing the secondary dialing plan. If any of the station sets with the shared line appearance respond to the incoming call, the DNM establishes the incoming call by interconnecting the calling station set to the called station set. Any of the other station sets with the shared line appearance may join the established incoming call by going off-hook.

EP-A-0 880 255 discloses a method for providing remote access to a telephone switching system through an Internet Protocol ("IP") network. A gateway is coupled to the telephone switching system and an IP network. A computing device is connected to the IP network and communicates with the IP network to obtain access to functions supported by the switching system. A user connects the computing device to the IP network to communicate with the gateway. The gateway comprises a voice to IP gateway. The gateway connects to a network, for example, a corporate intranet. Upon authentication of the user on the Internet and the intranet, the user accesses the functions on the intranet, for example, voice mail and desktop applications. A voice to IP gateway allows the user to access voice mail and telephone systems as well as computing applications. The voice to IP gateway comprises 2 parts: a Personal Computer ("PC") Digital Signal Processing ("DSP") card and a software component. The PC DSP card performs functions of the telephone switch interface and the audio and signaling processors. The software component "performs functions of the IP interface, such as converting the signals received from the PC DSP card to IP standards, before sending them to the IP network".

### SUMMARY

A system and method according to the invention are as set out in the independent claims. Preferred forms are set out in the dependent claims.

Pursuant to one embodiment of the invention, shortcomings of the existing art are overcome and additional advantages are provided through the provision of a phone connector component operationally connectable through a packet network to any selected one or more switch components for originating and/or terminating telecommunication service.

The invention in one embodiment encompasses a system. The system includes a phone that comprises a connector component that is operationally connectable through a packet network to any selected one or more of a plurality of switch components. The any selected one or more of the plurality of switch components serve to provide one or more of originating and terminating telecommunication service to the phone.

Another embodiment of the invention encompasses a method. There is selected a phone that comprises a connector component that is operationally connectable through a packet network to any selected one or more of a plurality of switch components. The any selected one or more of the plurality of switch components serve to provide one or more of originating and terminating telecommunication service to the phone.

A further embodiment of the invention encompasses an article. The article includes a computer-readable signal-bearing medium. The article includes means in the medium for selecting a phone that comprises a connector component that is operationally connectable through a packet network to any selected one or more of a plurality of switch components. The any selected one or more of the plurality of switch components serve to provide one or more of originating and terminating telecommunication service to the phone.

These and other features and advantages of one embodiment of the invention will become apparent from the description, the accompanying drawings, and the claims.

### BRIEF DESCRIPTION OF THE DRAWINGS

FIG. 1 is a functional block diagram of one example of a system that includes one or more instances of a phone, one or more instances of a modem, one or more instances of a (e.g., home) location, one or more instances of a passage, one or more instances of a multiplexor, one or more instances of a gateway, one or more instances of a switch component, one or more instances of a network, one or more instances of a (e.g., corporate) location, and one or more instances of a database.
FIG. 2 represents illustrative details of one example of an interface of a phone of the system of FIG. 1.
FIG. 3 represents one example of logic that is employable by the system of FIG. 1.
FIG. 4 represents illustrative details of another example of an interface of a phone of the system of FIG. 1.
FIG. 5 represents another example of logic that is employable by the system of FIG. 1.
FIG. 6 represents a further example of logic that is employable by the system of FIG. 1.

### DETAILED DESCRIPTION

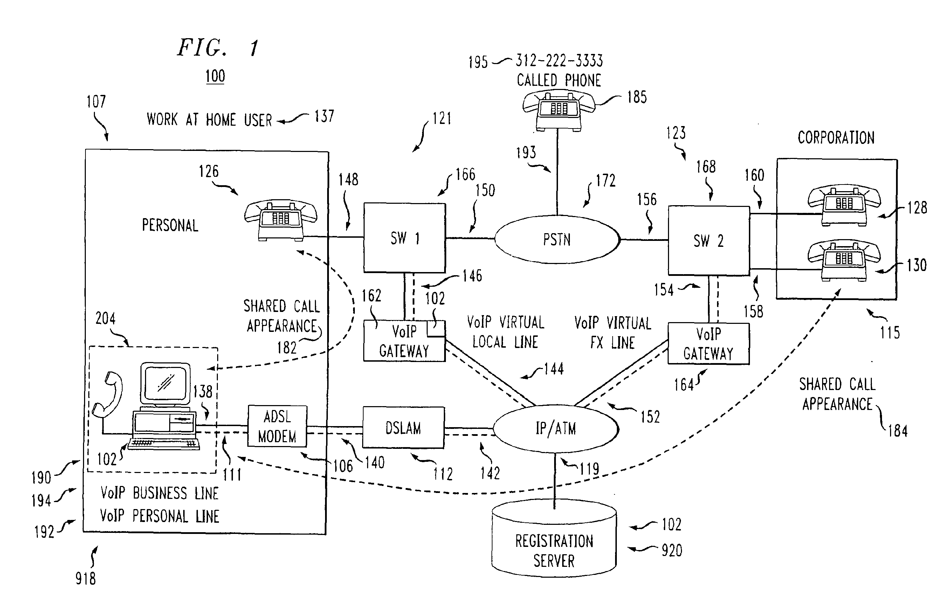

In one embodiment of the invention, a phone connector component is operationally connectable through a packet network to any selected one or more switch components for originating and/or terminating telecommunication service. A detailed discussion of one exemplary embodiment of the invention is presented herein, for illustrative purposes.
Turning to FIG. 1, system 100, in one example, includes a plurality of components such as computer software and/or hardware components. A number of such components can be combined or divided in one example of system 100. System 100 in one example employs at least one computer-readable signal-bearing medium. One example of a computer-readable signal-bearing medium for system 100 comprises an instance of recordable data storage medium 102 such as one or more of a magnetic, electrical, optical, biological, and atomic data storage medium. In another example, a computer-readable signal-bearing medium for system 100 comprises a modulated carrier signal transmitted over a network comprising or coupled with system 100, for instance, one or more of a telephone network, a local area network ("LAN"), the Internet, and a wireless network. An exemplary component of system 100 employs and/or comprises a series of computer instructions written in or implemented with any of a number of programming languages, as will be appreciated by those skilled in the art.

Referring again to FIG. 1, system 100 in one example comprises one or more components, for example, one or more of a phone of interface 204 and phones 126, 128, 130, and 185, one or more instances of modem 106, one or more instances of location 107, one or more of passages 138, 140, 142, 144, 146, 148, 150, 152, 154, 156, 158, 160, and 193, one or more instances of multiplexor 112, one or more instances of a gateway, one or more of switch components 166 and/or 168, one or more instances of a network, one or more instances of location 115, and one or more instances of registration server 920.

Still referring to FIG. 1, modem 106 in one example comprises one or more of an asymmetric digital subscriber loop ("ADSL") modem, a cable modem, and a dial up modem. In one example, modem 106 provides an "always on" data connection to a personal computer ("PC") of interface 204. For example, modem 106 and the personal computer of interface 204 have there between a continuous connection for data communication.

Again referring to FIG. 1, location 107 in one example comprises a home location. Location 115 in one example comprises one or more of a corporate location, a Centrex group, a corporation Centrex, and a corporate Centrex group.

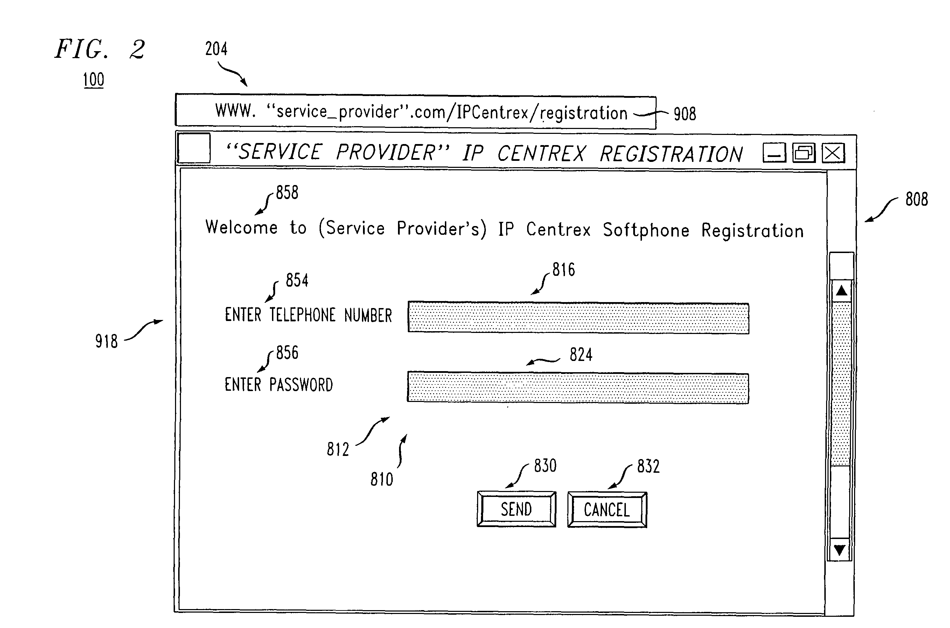

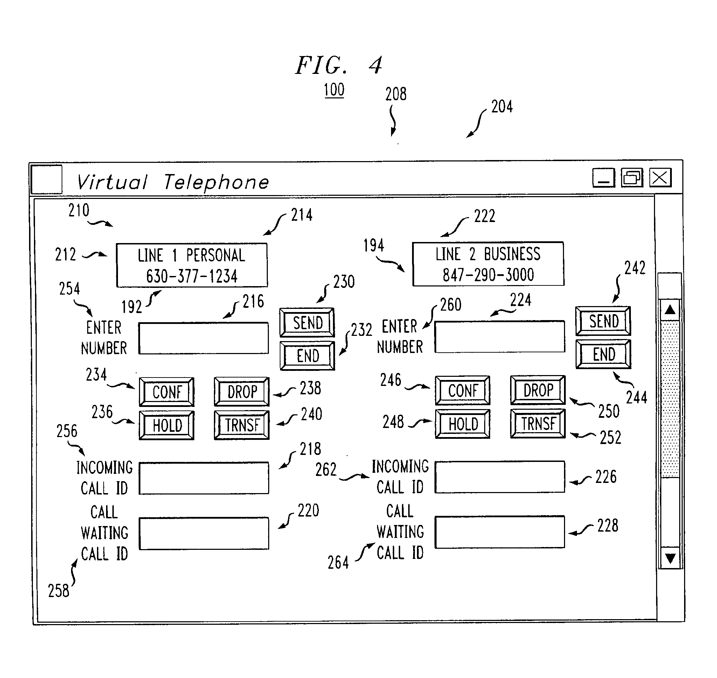

Further referring to FIG. 1, the personal computer in one example comprises one or more instances of interface 204. Exemplary instances of interface 204 comprise a first example of interface 204 (FIG. 2) and a second example of interface 204 (FIG. 4). For example, interface(s) 204 comprises an interface for one or more instances of user 137. In one example, interface 204 comprises one or more instances of a keyboard, a mouse, a pointing device, a cursor (not shown) and the like, as will be appreciated by those skilled in the art.

Referring still to FIG. 1, interface 204 in one example comprises the phone. The phone of interface 204 in one example comprises a connector component. The connector component of the phone of interface 204 in one example is operationally connectable through the network, for example, packet network 119, to any selected one or more of switch components 166 and/or 168. The any selected one or more of switch components 166 and /or 168, in one example serve to provide originating and/or terminating telecommunication service to the phone of interface 204.

Again referring to FIG. 1, originating telecommunication service in one example allows a subscriber to initiate a telephone call, for example, a first exemplary instance of call 190, into the network, for example, public switched telephone network ("PSTN") 172 that can terminate on any other phone. In a further example, originating phone service includes a number of features associated with originating phone calls (e.g., the first exemplary instance of call 190) such as billing, three-way calling, call blocking, and the like. Terminating phone service in one example allows a subscriber to receive call 190 from other phones connected to public switched telephone network 172. In a further example, terminating phone service includes a number of features for managing terminating calls, for example, another instance of call 190, such as call waiting, caller identification (" caller ID"), voice mail and the like.

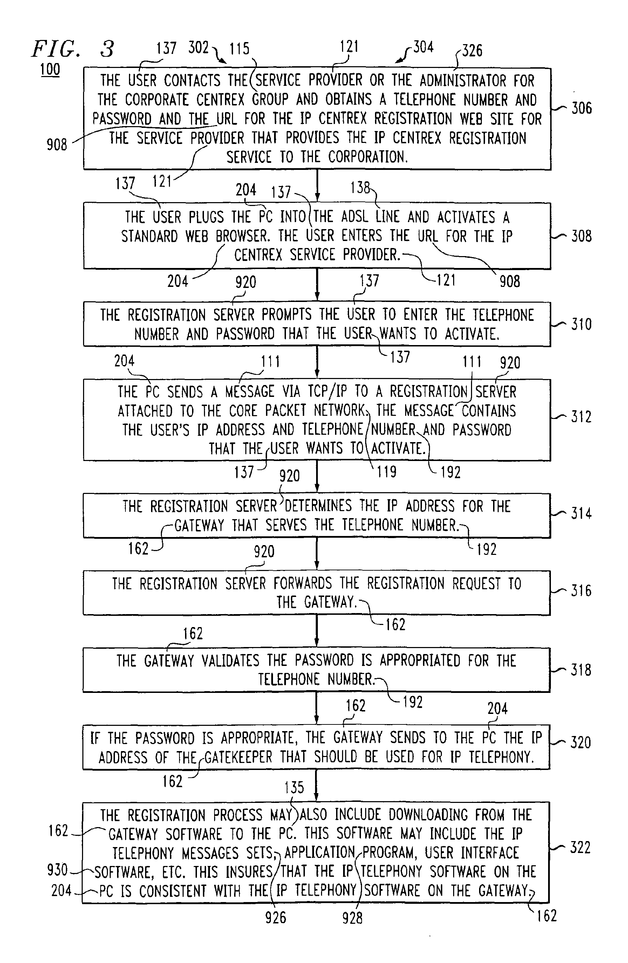

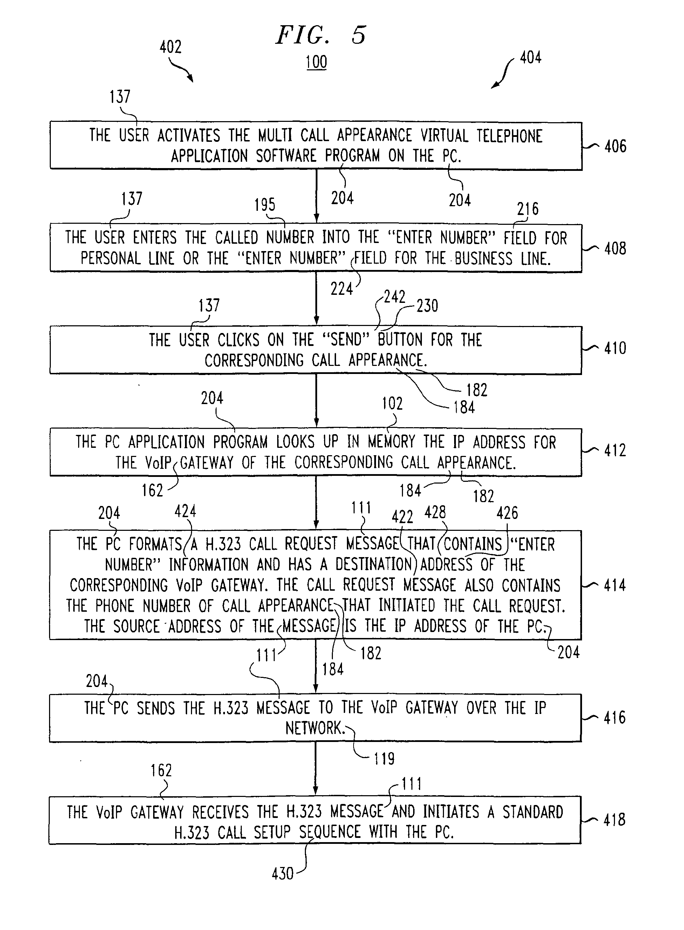

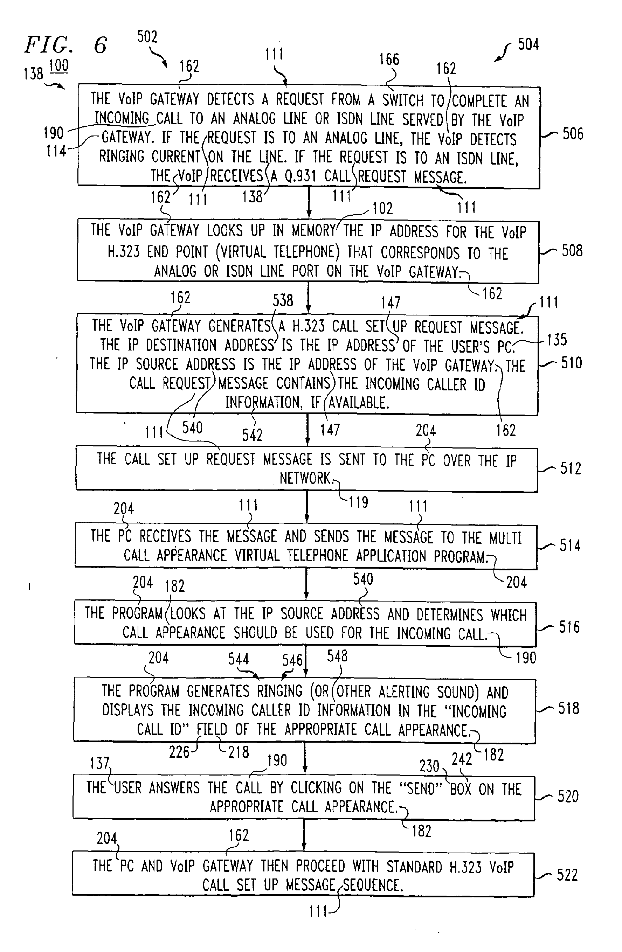

Still referring to FIG. 1, operational connection of the connector component of the phone of interface 204 through packet network 119 to any selected one or more of switch component 166 and/or 168 in one example comprises employment of the one or more instances of interfaces 204, for example, a first example of interface 204(FIG. 2 and a second example of interface 204 FIG. 4), and one or more portions of one or more of exemplary logics 302 (FIG. 3), 402 (FIG. 5), and 502 (FIG. 6). as described herein. For example, an instance of the connector component of the phone of interface 204 that is operationally connectable through packet network 119 to any selected one or more of switch components 166 and/or 168, comprises an instance of the connector component of interface 204 that has been registered with the selected one or more of switch components 166 and/or 168.

Referring again to FIG. 1, in one example, the connector component of the phone of interface 204 employs explicit selection 918 of switch component 166 or 168 to operationally connect the phone of interface 204 through packet network 119 to switch component 166 or 168. Explicit selection 918 in one example comprises employment by user 137 of one or more portions of exemplary logic 302 (FIG. 3), as described herein. In one example, user 137 inputs explicit selection 918 through employment of the first example of interface 204 (FIG. 2) and uniform resource locator ("URL") 908 (FIG. 3), to select switch component 166 that is owned and/or operated by an instance of a service provider, for example, service provider 121 or 123. An illustrative description of exemplary logic 302 is presented herein.

In a further example, referring to FIG. 1, different service providers 121 and 123 own and/or operate different switch components 166 and/or 168. In a still further example, service provider 121 owns and/or operates switch components 166 and/or 168, for example, that comprise a subset of multiple instances of switch component in system 100.

Still referring to FIG. 1, one example of operational connection of the connector component of the phone of interface 204 to any selected switch component 166 and/or 168, through packet network 119 comprises registration of the phone of interface 204 with service provider 121 and/or 123 that is associated with the selected switch component 166 and/or 168. An illustrative description of exemplary operation of the connector component of the phone of interface 204 is presented herein.

Again referring to FIG. 1, the connector component of the phone of interface 204 in one example comprises a logic implementation. The logic implementation of the connector component of the phone of interface 204 in one example comprises a software application program. The logic implementation of the connector component of the phone of interface 204 in one example is located on an instance of recordable data storage medium 102 of the personal computer of interface 204. In one example, the logic implementation of the connector component of the phone of interface 204 accesses one or more instances of passage138, for example, an instance of a line such as a virtual voice line. For example, the logic implementation of the connector component of the phone of interface 204 serves to support one or more (e.g., two) instances of the virtual voice line of passage 138. The virtual voice line of passage 138 in one example provides the signaling information and bearer (e.g., voice) information associated with a telephone line. In one example, the virtual voice line of passage 138 uses data packets to carrier the bearer (e.g., voice) information, as will be appreciated by those skilled in the art.

Referring further to FIG. 1, in one example, the personal computer of interface 204 employs a transmission control protocol/Internet protocol ("TCP/IP"), for example, to send one or more instances of message 111 over one or more instances of passage 138.

Referring still to FIG. 1, the passage (e.g., passage 138) in one example comprises a communications passage. In a further example, the passage comprises a line, for example, the virtual voice line of passage 138. For example, the passage serves to communicate one or more instances of message 111. In one example, the passage comprises a number of portions of one or more of an electrical path, an optical path, a wireless path, a wireline path, a hardware path, and a software path.

Referring again to FIG. 1, passage 138 in one example comprises a continuous connection for data communication between modem 106 and the personal computer of interface 204. In one example, passage 138 comprises one or more of an asymmetric digital subscriber loop line and one or more instances of the virtual voice line of passage 138, for example, a voice over Internet protocol ("VoIP") virtual business line and/or a voice over Internet protocol virtual personal line. The voice over Internet protocol virtual business line of passage 138 in one example comprises an H.323 voice over Internet protocol derived virtual voice line. The voice over Internet protocol virtual personal line of passage 138 in one example comprises an H.323 voice over Internet protocol virtual voice line, as will be appreciated by those skilled in the art.

Referring further to FIG. 1, passage 144 in one example comprises a voice over Internet protocol virtual local line. Passage 152 in one example comprises a voice over Internet protocol virtual foreign exchange ("FX") line, as will be appreciated by those skilled in the art.

Again referring to FIG. 1, the one or more instances of the gateway in one example comprises voice over Internet protocol gateway 162 and 164. The voice over Internet protocol gateways 162 and 164 in one example comprise respective H.323 gateways.

Referring still to FIG. 1, switch component 166 in one example is coupled with voice over Internet protocol gateway 162. Switch component 168 in one example is coupled with voice over Internet protocol gateway 164.

Further referring to FIG. 1, switch component 166 in one example is associated with an instance of service provider 121 of system 100. Service provider 121 in one example owns and/or operates switch component 166. Service provider 123 in one example owns and/or operates switch component 168. In another example, switch components 166 and 168 are owned and/or operated by a same service provider 121.

Still referring to FIG. 1, voice over Internet protocol gateway 162 in one example is owned and/or operated by a same instance of service provider 121 that owns and/or operates switch component 166. In another example, voice over Internet protocol gateway 162 in one example is owned and/or operated by a different service provider 121 or 123 from service provider 121 that owns and/or operates switch component 166. Voice over Internet protocol gateway 164 in one example is owned and/or operated by a same service provider 123 that owns and/or operates switch component 168. In a further example, voice over Internet protocol gateway 164 in one example is owned and/or operated by a different service provider 121 or 123 from service provider 123 that owns and/or operates switch component 168. In a still further example, voice over Internet protocol gateways 162 and 164 are owned and/or operated by a same service provider 121 or 123. In yet another example, voice over Internet protocol gateways 162 and 164 are owned and/or operated by different service providers 121 and/or 123.

Again referring to FIG. 1, the phone of interface 204 in one example is registrable with any selected one of service providers 121 and/or 123. In one example, the phone of interface 204 is registrable with a first switch component 166 of a first service provider 121 or 123 at a first exemplary time, and the phone of interface 204 is registrable with a second switch component 166 of a second service provider 121 or 123 at a second exemplary time. For example, the phone of interface 204 is registrable with switch component 166 of service provider 121 at a first exemplary time, and the phone of interface 204 is registrable with switch component 168 of service provider 123 at a second exemplary time. In one example, the first exemplary time comprises a portion that is contemporaneous with a portion of the second exemplary time. For example, the first exemplary time and the second exemplary time are overlapping and/or concurrent. In another example, the first exemplary time comprises no portion that is contemporaneous with a portion of the second exemplary time. For example, the first exemplary time and the second exemplary time are one or more of distinct, non-overlapping, and sequential. An illustrative discussion of exemplary registration of the phone of interface 204 is presented herein, for explanatory purposes.

Referring still to FIG. 1, exemplary instances of the network comprise packet network 119 and public switched telephone network 172. Packet network 119 in one example comprises an Internet protocol/asynchronous transfer mode ("IP/ATM") network. A database in one example comprises an exemplary instance of recordable data storage medium 102. One exemplary instance of registration server 920 comprises a registration database, for example, recordable data storage medium 102, coupled with an instance of the network such as packet network 119.

Referring further to FIG. 1, the line of the passage, (e.g., passage 138) comprises a virtual business line. The virtual business line of passage 138 in one example can be assigned to any selected one of a plurality of instances of location 115, for example, the Centrex group of system 100. For example, the phone of interface 204 is registrable with a first instance of the Centrex group at a first exemplary time, and the phone of interface 204 is registrable with a second instance of the Centrex group at a second exemplary time. In one example, the first exemplary time comprises a portion that is contemporaneous with a portion of the second exemplary time. For example, the first exemplary time and the second exemplary time are overlapping and/or concurrent. In another example, the first exemplary time comprises no portion that is contemporaneous with a portion of the second exemplary time. For example, the first exemplary time and the second exemplary time are one or more of distinct, non-overlapping, and sequential. An illustrative discussion of exemplary registration of the phone of interface 204 is presented herein, for explanatory purposes.

Turning to FIG. 3, exemplary logic 302 in one example comprises one or more instances of STEP 304. Exemplary instances of STEP 304 comprise STEPS 306, 308, 310, 312, 314, 316, 318, 320, and 322.

Referring to FIGS. 1-3, at STEP 306 in one example user 137 contacts one or more of service providers 121 and/or 123 and administrator 326, for example, for location 115, for example, the corporate Centrex group. User 137 in one example obtains an instance of a phone number and an instance of a password. Called numbers 192 and 194 in one example comprise exemplary instances of the phone number. In a further example, user 137 obtains uniform resource locator 908. Uniform resource locator 908 in one example is associated with an Internet protocol Centrex registration server, for example, registration server 920, for service provider 123 that provides an Internet protocol Centrex registration service to location 115, for example, the corporate location. STEP 306 in one example proceeds to STEP 308.

Still referring to FIGS. 1-3, at STEP 308 in one example user 137 employs an instance of the logic implementation of the connector component of the phone of interface 204, for example, located on an instance of recordable data storage medium 102 of the personal computer of interface 204. The logic implementation of the connector component of the phone of interface 204 in one example comprises a browser such as World Wide Web browser. In one example, at STEP 308 user 137 plugs the personal computer of interface 204 into modem 106, for example, the asymmetric digital subscriber loop line, and activates the World Wide Web browser of the logic implementation of the connector component of the phone of interface 204. In a further example, at STEP 308 user 137 enters uniform resource locator 908 for service provider 121 that provides the Internet protocol Centrex registration service to location 115, for example, the corporate location. STEP 308 in one example proceeds to STEP 310.

Further referring to FIGS. 1-3, at STEP 310 in one example registration server 920 serves to prompt user 137 to enter one or more instances of the phone number, for example, called number 192. Registration server 920 in one example comprises a server for the Internet protocol Centrex registration server. For example, registration server 920 serves to prompt user 137 to enter an instance of the phone number (e.g., phone number 192) and an instance of the password (e.g., the password) that user 137 wishes to activate.

Referring to FIG. 2, the first example of interface 204 (FIG. 2) in one example comprises an instance of a graphical user interface ("GUI''). In one example, the first example of interface 204 comprises layout 808. For example, the first example of interface 204 comprises one or more instances of graphic component 810. Graphic component 810 in one example comprises one or more instances of icon 812. Exemplary instances of graphic component 810 comprise fields 816 and 824, buttons 830 and 832, and descriptive information 854, 856, and 858.

Again referring to FIGS. 1-3, in a further example, at STEP 310 user 137 enters into field 816 an instance of the phone number, for example, called number 192, that user 137 wishes to activate, and enters into field 824 an instance of the password that user 137 wishes to activate. STEP 310 in one example proceeds to STEP 312.

Referring still to FIGS. 1-3, at STEP 312 in one example the personal computer of interface 204 sends one or more instances of message 111. For example, the personal computer of interface 204 employs the transmission control protocol/Internet protocol to send an instance of message 111 to registration server 920. Registration server 920 in one example is attached to packet network 119. The instance of message 111 in one example comprises an instance of an address, and the instance of the phone number, for example, called number 192, and the instance of the password that user 137 wishes to activate. The instance of the address of message 111 in one example is associated with the personal computer of interface 204 of user 137. STEP 312 in one example proceeds to STEP 314.

Again referring to FIGS. 1-3, at STEP 314 in one example registration server 920 determines an instance of Internet protocol address for voice over Internet protocol gateway 164 that serves the instance of the phone number, for example, called number 192. In one example, voice over Internet protocol gateway 164 is connected with switch component 121 or 123 that provides the Centrex services to a Centrex group with which a user, for example, user 137, is registering. STEP 314 in one example proceeds to STEP 316.

Still referring to FIGS. 1-3, at STEP 316 in one example registration server 920 sends one or more instances of message 111 such as an instance of a registration request, to the instance of the gateway for the instance of the phone number, for example, called number 192. STEP 316 in one example proceeds to STEP 318.

Referring again to FIGS. 1-3, at STEP 318 in one example the instance of voice over Internet protocol gateway 164 for the instance of the phone number, for example, called number 192, determines that the instance of the password that user 137 wishes to activate is correct for the instance of the phone number, for example, called number 192. For example, the instance of voice over Internet protocol gateway 164 for the instance of the phone number, for example, called number 192, validates the instance of the password that user 137 wishes to activate. STEP 318 in one example proceeds to STEP 320.

Further referring to FIGS. 1-3, at STEP 320 in one example if the instance of voice over Internet protocol gateway 164 for the instance of the phone number, for example, called number 192, determines that the instance of the password that user 137 wishes to activate is correct for the instance of the phone number, for example, called number 192, then the instance of voice over Internet protocol gateway 164 for the instance of the phone number (e.g., called number 192) sends to the personal computer of interface 204 of user 137, an instance of the Internet protocol address that is associated with the instance of voice over Internet protocol gateway 164, for example, the Internet protocol address that is to be used for Internet protocol telephony. In one example, STEP 320 terminates exemplary logic 302. In another example, STEP 320 proceeds to STEP 322.

Referring again to FIGS. 1-3, at STEP 322 in one example the instance of voice over Internet protocol gateway 164 for the instance of the phone number, for example, called number 192, downloads one or more instances of a software to the personal computer of interface 204 of user 137. Exemplary instances of the software comprise one or more instances of Internet protocol telephony messages set 926, one or more instances of application program 928, and one or more instances of user interface software 930, as will be appreciated by those skilled in the art. In one example, STEP 322 serves to ensure that one or more instances of an Internet protocol telephony software located on the personal computer of interface 204 of user 137, are consistent with one or more instances of the Internet protocol telephony software located on the instance of voice over Internet protocol gateway 164 for the instance of the phone number, for example, called number 192.

Now referring to FIGS. 1 and 4, the phone of interface 204 in one example comprises one or more of a voice over Internet protocol phone and a soft phone. For example, the soft phone comprises a virtual telephone. The soft phone in one example is based at the personal computer of interface 204.

Referring again to FIGS. 1 and 4, in one example, user 137 employs the phone of interface 204. User 137 in one example comprises one or more instances of a human operator. In a further example, user 137 comprises one or more instances of a computing device.

Still referring to FIGS. 1 and 4, in one example, user 137 comprises a user that spends a portion of time at location 107, for example, a home location, and a portion of time at location 115, for example, a corporate location. In another example, user 137 comprises a user that works (e.g., primarily) from one or more locations other than location 115, for example, an instance of user 137 that works (e.g., primarily) at location 107 and/or one or more locations other than location 115. In one example, user 137 gains access to the network, for example, packet network 119 (e.g., an Internet protocol/asynchronous transfer mode network), from various remote locations, for example, using any one of several (e.g., standard) remote access arrangements such as dial-up modems. In another example, user 137 gains access to the network, for example, packet network 119 (e.g., the Internet protocol/asynchronous transfer mode network), from various remote locations via a remote Internet Service provider, such as service provider 123.

Further referring to FIGS. 1 and 4, the second example of interface 204 (FIG. 4) in one example comprises the graphical user interface for the second shared call appearance. In one example, the second example of interface 204 (FIG. 4) comprises layout 208. For example, the second example of interface 204 (FIG. 4) comprises one or more instances of graphic component 210. Graphic component 210 in one example comprises one or more instances of icon 212. Exemplary instances of graphic component 210 comprise fields 216 and 224, displays 214, 218, 220, 222, 226, and 228, buttons 230, 232, 234, 236, 238, 240, 242, 244, 246, 248, 250, and 252, and descriptive information 254, 256, 258, 260, 262, and 264.

Again referring to FIGS. 1 and 4, the phone of interface 204 in one example comprises one or more instances of a call appearance. The call appearance in one example comprises a shared call appearance. The shared call appearance in one example comprises an electronic implementation of an extension phone. For example, the call appearance of the phone of interface 204 comprises the call appearance that the phone of interface 204 shares with one of the phones, for example, phone 130 of location 115, for example, the Centrex group. Exemplary instances of the call appearance comprise call appearances 182 and 184. In one example, the phone of interface 204 shares call appearance 182 with phone 126. For example, if the terminating call, for example, the second exemplary instance of call 190, attempts to terminate at phone 126, call appearance 182 in one example serves to cause both phone 126 and the phone of interface 204 to generate an alerting tone, and either phone 126 or the phone of interface 204 in one example can answer the call 190. In another example, the phone of interface 204 shares call appearance 184 with phone 130.

Referring still to FIGS. 1 and 4, switch component 166 in one example serves to support call appearance 182. Switch component 168 in one example serves to support call appearance 184. Interface 204 in one example serves to present an instance of a graphical user interface for each one of one or more shared call appearances supported by switch components 121 and/or 123. In one example, the interface 204 comprises a first instance of the graphical user interface for a first shared call appearance, for example, call appearance 182, supported by switch component 166. In another example, the interface 204 comprises a second instance of the graphical user interface for a second shared call appearance, for example, call appearance 184, supported by switch component 168. For example, the second example of interface 204 (FIG. 4) serves to present a plurality of instances of the graphical user interface of the interface 204 for the one or more shared instances of call appearances 182 and 184 that are each supported by respective instances of switch components 166 and 168.

Further referring to FIGS. 1 and 4, user 137 in one example sends and/or receives one or more instances of call 190, for example, the first and second exemplary instances of call 190, through any corresponding one or more of a plurality of instances of the call appearance. For example, user 137 sends and/or receives calls, for example, the first and second exemplary instances of call 190, from either of the instances of the call appearances 182 and 184. In one example, such an implementation of system 100 advantageously simplifies wiring for premises such as location 107, for example, the home location, by providing a plurality of (e.g., two) instances of a virtual line on one instance of the line of the passage, (e.g., passage 138). For example, such an implementation of system 100 advantageously simplifies wiring for premises such as location 107, for example, the home location, by providing both a voice over Internet protocol virtual business line and also the voice over Internet protocol virtual personal line of passage 138. Such an implementation of system 100 in one example advantageously allows user 137 to conveniently originate outgoing calls, for example, the first exemplary instance of call 190, with billing appropriately charged to (e.g., a business) phone 130 or (e.g., a personal) phone 126.

Turning to FIG. 5, exemplary logic 402 in one example comprises one or more instances of STEP 404. Exemplary instances of STEP 404 comprise STEPS 406, 408, 410, 412, 414, 416, and 418.

Referring again to FIG. 5, at STEP 406 in one example user 137 employs an instance of the logic implementation of the connector component of the phone of interface 204, for example, located on the instance of recordable data storage medium 102 of the personal computer of interface 204. The logic implementation of the connector component of the phone of interface 204 in one example comprises a multi-call appearance virtual telephone application software program. STEP 406 in one example proceeds to STEP 408.

Referring still to FIG. 5, at STEP 408 in one example user 137 enters an instance of called phone number 195 into field 216 or 224. In one example, user 137 enters called phone number 195 for the voice over Internet protocol virtual personal line into field 216. In another example, user 137 enters called phone number 195 for the voice over Internet protocol virtual business line into field 224. STEP 408 in one example proceeds to STEP 410.

Further referring to FIG. 5, at STEP 410 in one example user 137 activates button 230 or 242, for example, to set up an instance of call 190 to an instance of called phone number 195. STEP 410 in one example proceeds to STEP 412.

Again referring to FIG. 5, at STEP 412 in one example the multi-call appearance virtual telephone application software program of the logic implementation of the connector component of the phone of interface 204 obtains an instance of the Internet protocol address, for example, for an instance of voice over Internet protocol gateway 162 or 164 that corresponds to the corresponding instance of call appearance 182 or 184. For example, the multi-call appearance virtual telephone application software program of the logic implementation of the connector component of the phone of interface 204 accesses one or more of an instance of recordable data storage medium 102 of the personal computer of interface 204, to obtain the instance of the Internet protocol address of the corresponding instance of call appearance 182 or 184. STEP 412 in one example proceeds to STEP 414.

Still referring to FIG. 5, at STEP 414 in one example the personal computer of interface 204 serves to format an instance of message 111. For example, the personal computer of interface 204 serves to format an instance of message 111 that comprises a call request message, for example, an H.323 call request message. Message 111 comprising the H.323 call request message in one example comprises information 424 and information 426. Information 424 in one example comprises information that is based on the instance of the called phone number 195 that user 137 has entered into field 216 or 224. In a further example, message 111 comprising the H.323 call request message comprises the phone number, for example, called number 192, of an instance of the call appearance, for example, call appearance 182, that initiated message 111 that comprises the H.323 call request message. Information 426 in one example comprises a destination address, for example, for the corresponding instance of voice over Internet protocol gateway 162 or 164. In one example, message 111 comprising the H.323 call request message comprises a source address 428. The source address 428 of message 111 comprising the H.323 call request message in one example comprises an instance of the Internet protocol address for the personal computer of interface 204. STEP 414 in one example proceeds to STEP 416.

Again referring to FIG. 5, at STEP 416 in one example the personal computer of interface 204 sends message 111 comprising the H.323 call request message, for example, over the network to the instance of voice over Internet protocol gateway 162 or 164. For example, the personal computer of interface 204 sends message 111 comprising the H.323 call request message over packet network 119. STEP 416 in one example proceeds to STEP 418.

Referring still to FIG. 5, at STEP 418 in one example the instance of voice over Internet protocol gateway 162 or 164receives message 111 comprising the H.323 call request message. Therefore, voice over Internet protocol gateway 162 or 164initiates call setup sequence 430. For example, voice over Internet protocol gateway 162 or 164 initiates the call setup sequence 430, for example, a standard instance of a H.323 call setup sequence.

Referring still to FIG. 5, at STEP 418 in one example the instance of voice over Internet protocol gateway 162 or 164 receives the call request message, for example, the H.323 call request message, for example, from the phone of interface 204. In a further example, voice over Internet protocol gateway 162 or 164 in turn initiates call setup sequence 430 through an instance of switch component 166 or 168, for example, using any selected one of a variety of instances of signaling format 432. Exemplary instances of signaling format 432 comprise analog touch tones, integrated services digital network Q.931 signaling, and GR303 integrated digital loop carrier signaling, as will be appreciated by those skilled in the art.

Turning to FIG. 6, exemplary logic 502 in one example comprises one or more instances of STEP 504. Exemplary instances of STEP 504 comprise STEPS 506, 508, 510, 512, 514, 516. 518, 520, and 522.

Referring again to FIG. 6, at STEP 506 in one example an instance of voice over Internet protocol gateway 162 or 164 receives an instance of message 111. For example. voice over Internet protocol gateway 162 receives an instance of message 111 comprising a request. The request of message 111 in one example comprises a request from switch component 166 or 168 to complete an instance of call 190, for example, to an instance of the line of passage 138. for example, served by the instance of voice over Internet protocol gateway 162. In one example, the request of message 111 comprises a request from switch component 166 to complete an instance of call 190 to an instance of the line (e.g. an analog line or an integrated services digital network ("ISDN") line) of passage 138. For example, the gate way, for example, voice over Internet protocol gateway 162, detects the instance of the request of message 111 from switch component 166 to complete an instance of an incoming call, for example, the second exemplary instance of call 190. In one example, an instance of the request of message 111 is directed to an instance of the line, for example, the analog line, of passage 138 and the instance of voice over Internet protocol gateway 162 therefore detects a ringing current on the instance of the analog line of passage 138. In another example, an instance of the request of message 111 is directed to an instance of the integrated services digital network line of the line of passage 138, and the instance of voice over Internet protocol gateway 162 therefore receives an instance of message 111, for example, an instance of the call request message, for example, a Q.931 call request message. STEP 506 in one example proceeds to STEP 508.

Still referring to FIG. 6, at STEP 508 in one example voice over Internet protocol gateway 162 obtains an instance of the Internet protocol address. The instance of the Internet protocol address in one example corresponds to the Internet protocol address for the personal computer of interface 204 of user 137. STEP 508 in one example proceeds to STEP 510.

Further referring to FIG. 6. at STEP 510 in one example voice over Internet protocol gate way 162 outputs one or more instances of message 111. For example, voice over Internet protocol gateway 162 generates an instance of message 111 comprising an H.323 call setup request message. Message 111 comprising the H.323 call setup request message in one example comprises one or more instances of the Internet protocol address, for example, an Internet protocol destination address 538 and an Internet protocol source address 540. Internet protocol destination address 538 in one example comprises an instance of the Internet protocol address that corresponds to the personal computer of interface 204 of user 137. Internet protocol source address 540 in one example corresponds to an instance of the Internet protocol address for the instance of voice over Internet protocol gateway 162. In a further example, message 111 comprising the H.323 call setup request message comprises incoming caller identification ("ID") information 542. STEP 510 in one example proceeds to STEP 512.

Referring still to FIG. 6, at STEP 512 in one example voice over Internet protocol gateway 162 sends message 111 comprising the H.323 call setup request message over the network, for example, packet network 119 (e.g., the Internet protocol/asynchronous transfer mode network), to the personal computer of interface 204. STEP 512 in one example proceeds to STEP 514.

Referring further to FIG. 6, at STEP 514 in one example the personal computer of interface 204 receives message 111 comprising the H.323 call setup request message. For example, the personal computer of interface 204 directs message 111 comprising the H.323 call setup request message to the multi-call appearance virtual telephone application software program. STEP 514 in one example proceeds to STEP 516.

Again referring to FIG. 6, at STEP 516 in one example the multi-call appearance virtual telephone application software program of the logic implementation of the connector component of the phone of interface 204 employs Internet protocol source address 540 to select an instance of (e.g., graphical user) interface 204 to use for the shared call appearance, for example, call appearance 182 to employ for the instance of the incoming call, for example, the second exemplary instance of call 190. STEP 516 in one example proceeds to STEP 518.

Further referring to FIG. 6, at STEP 518 in one example the multi-call appearance virtual telephone application software program of the logic implementation of the connector component of the phone of interface 204 presents information 544. Information 544 in one example comprises one or more of alert 546 and information 548. Alert 546 in one example comprises a ringing sound. Information 548 in one example comprises incoming caller identification information. The multi-call appearance virtual telephone application software program of the logic implementation of the connector component of the phone of interface 204 in one example displays incoming caller identification information of information 544 in display 218 or 226 for the instance of (e.g., graphical user) interface 204. STEP 518 in one example proceeds to STEP 520.

Referring again to FIG. 6, at STEP 520 in one example user 137 receives the incoming call, for example, the second exemplary instance of call 190. For example, user 137 answers the incoming call, (e.g., the first exemplary instance of call 190) by activating button 230 or 242 for the instance of the shared call appearance, for example, the call appearance 182. In one example, user 137 activates button 230 or 242 by clicking button 230 or 242. STEP 520 in one example proceeds to STEP 522.

Still referring to FIG. 6, at STEP 522 in one example the personal computer of interface 204 and voice over Internet protocol gateway 162 or 164 execute message 111 comprising a call setup message sequence. Message 111 comprising the call message sequence in one example comprises one or more of a voice over Internet protocol call setup message sequence and an H.323 voice over Internet protocol call setup message sequence. For example, the personal computer of interface 204 and voice over Internet protocol gateway 162 or 164 proceed with message 111 comprising a standard instance of H.323 voice over Internet protocol call setup message sequence.

In one example, the multi-call appearance virtual telephone application software program of the logic implementation of the connector component of the phone of interface 204 looks at the instance of the Internet protocol address that is associated with the instance of voice over Internet protocol gateway 162 or 164 that initiated call setup sequence 430, to identify the instance of voice over Internet protocol gateway 162 or 164, among a plurality of instances of instance of voice over Internet protocol gateway 162 and 164. Based on this identification of the instance of voice over Internet protocol gateway 162 or 164 that initiated call setup sequence 430. the multi-call appearance virtual telephone application software program of the logic implementation of the connector component of the phone of interface 204 in one example selects the appropriate instance of (e.g., graphical user) interface 204 for an instance of the call appearance to display an incoming instance of call 190.

The flow diagrams depicted herein are just exemplary. There may be many variations to these diagrams or the steps or operations described therein without departing from the scope of the invention as defined in the claims. For instance, the steps may be performed in a differing order, or steps may be added, deleted, or modified.

## Claims

1. A system, comprising:
a phone (204) that comprises a connector component (204) that is operationally connectable through a packet network (119) to any selected one or more of a plurality of switch components (166); and
a registration server (920) that is coupled with the packet network (119);
wherein the any selected one or more of the plurality of switch components (166) serve to provide one or more of originating and terminating telecommunication service to the phone (204);
wherein the any selected one or more of the plurality of switch components (166) serve to support one or more call appearances (182) associated with the phone (204);
wherein the connector component (204) allows a user (137) to provide for a selection of the one or more of the one or more call appearances (182);
wherein the registration server (920) determines an Internet protocol address for a voice over Internet protocol gateway (164) that serves a phone number (192) associated with the phone (204), wherein the phone number (192) serves to select the any selected one or more of the plurality of switch components (166).

2. The system of claim 1, wherein the plurality of switch components (166) comprises a first switch component (166) and a second switch component (168);
wherein the phone (204) comprises a first phone (204) and a connector component (204) that is operationally connectable to the first switch component (166) through the packet network (119) and operationally connectable to the second switch component (168) through the packet network (119); and
wherein the first phone (204) comprises a shared call appearance (182) with a second phone (126) over the first switch component (166) and through the packet network (119), wherein the second phone (126) comprises the shared call appearance (182) with the first phone (204) over the first switch component (166) and through a network (119); and
wherein the first phone (204) comprises a second shared call appearance (184) with a third phone (130) over the second switch component (168) and through the packet network (119), wherein the third phone (130) comprises the second shared call appearance (184) with the first phone (204) over the second switch component (168) and through a network (119).

3. The system of claim 1, wherein the phone (204) is registrable with any selected one of a plurality of voice over Internet protocol gateways (162);
wherein the plurality of voice over Internet protocol gateways (162) comprises a first voice over Internet protocol gateway (162) and a second voice over Internet protocol gateway (164);
wherein the phone (204) is registrable with the first voice over Internet protocol gateway (162) at a first time; and
wherein the phone (204) is registrable with the second voice over Internet protocol gateway (164) at a second time.

4. The system of claim 1, wherein the phone (204) is registrable with any selected one of a plurality of voice over Internet protocol gateways (162) that are owned and/or operated by a plurality of service providers (121);
wherein the plurality of service providers (121) comprises a first service provider (121) and a second service provider (123), wherein the plurality of voice over Internet protocol gateways (162) comprises a first voice over Internet protocol gateway (162) of the first service provider (121) and a second voice over Internet protocol gateway (164) of the second service provider (123);
wherein the phone (204) is registrable with the first voice over Internet protocol gateway (162) of the first service provider (121) at a first time; and
wherein the phone (204) is registrable with the second voice over Internet protocol gateway (164) of the second service provider (123) at a second time.

5. A method, comprising the steps of:
selecting a phone (204) that comprises a connector component (204) that is operationally connectable through a packet network (119) to any selected one or more of a plurality of switch components (166);
wherein the any selected one or more of the plurality of switch components (166) serve to provide one or more of originating and terminating telecommunication service to the phone (204);
receiving from a user (137) of the phone (204) an explicit selection (918) of the any selected one or more of the particular switch components (166);
determining an Internet protocol address for a voice over Internet protocol gateway (164) based on the explicit selection (918);
wherein the any selected one or more of the particular switch components (166) are coupled with the voice over Internet protocol gateway (164);
employing the explicit selection (918) with the connector component (204) to operationally connect the phone (204) through the packet network (119) to the any selected one or more of the particular switch components (166);
employing the connector component (204) to allow the user (137) to explicitly select one call appearance (182) of a plurality of call appearances (182) associated with the phone (204);
initiating from the phone (204), an outgoing call (190) associated with the one call appearance (182); and
associating the one call appearance (182) explicitly selected by the user (137) of the phone (204) with the any selected one or more of the particular switch components (166).

6. The method of claim 5, wherein the step of selecting the phone (204) that comprises the connector component (204) that is operationally connectable through the packet network (119) to the any selected one or more of the plurality of switch components (166) comprises the steps of:
selecting the phone (204) to comprise a first phone (204); and
selecting the first phone (204) to comprise a shared call appearance (182) with a second phone (126) over a switch component (166) of the plurality of switch components (166) and through the packet network (119), wherein the second phone (126) comprises the shared call appearance (182) with the first phone (204) over the switch component (166) and through a network (119).

7. The method of claim 5, wherein the plurality of switch components (166) comprises a first switch component (166) and a second switch component (168), wherein the step of selecting the phone (204) that comprises the connector component (204) that is operationally connectable through the packet network (119) to the any selected one or more of the plurality of switch components (166) comprises the step of:
selecting the phone (204) to comprise the connector component (204) that is operationally connectable to the first switch component (166) through the packet network (119) and operationally connectable to the second switch component (168) through the packet network (119).

8. The method of claim 7, wherein the step of selecting the phone (204) to comprise the connector component (204) that is operationally connectable to the first switch component (166) through the packet network (119) and operationally connectable to the second switch component (168) through the packet network (119) comprises the steps of:
selecting the phone (204) to comprise a first phone (204);
selecting the first phone (204) to comprise a shared call appearance ( 182) with a second phone (126) over the first switch component (166) and through the packet network (119), wherein the second phone (126) comprises the shared call appearance (182) with the first phone (204) over the first switch component (166) and through a network (119); and
selecting the first phone (204) to comprise a second shared call appearance (184) with a third phone (130) over the second switch component (168) and through the packet network (119), wherein the third phone (130) comprises the second shared call appearance (184) with the first phone (204) over the second switch component (168) and through the network (119).

9. The method of claim 5, wherein the step of selecting the phone (204) that comprises the connector component (204) that is operationally connectable through the packet network (119) to the any selected one or more of the plurality of switch components (166) comprises the step of:
selecting the phone (204) to be registrable with any selected one of a plurality of voice over Internet protocol gateways (162) that are owned and/or operated by a plurality of service providers (121).

10. The method of claim 9, wherein the plurality of service providers (121) comprises a first service provider (121) and a second service provider (123), wherein the plurality of voice over Internet protocol gateways (162) comprises a first voice over Internet protocol gateway (162) of the first service provider (121) and a second voice over Internet protocol gateway (164) of the second service provider (123), wherein the step of selecting the phone (204) to be registrable with the any selected one of the plurality of voice over Internet protocol gateways (162) that are owned and/or operated by the plurality of service providers (121) comprises the steps of:
registering the phone (204) with the first voice over Internet protocol gateway (162) of the first service provider (121) at a first time; and
registering the phone (204) with the second voice over Internet protocol gateway (164) of the second service provider (123) at a second time.
